# EUROPÄISCHE PATENTANMELDUNG

(11) **EP 1 892 939 A1**
(43) Veröffentlichungstag der Anmeldung: **27.02.2008**
(21) Anmeldenummer: 07014424.1
(22) Anmeldetag: 23.07.2007
(51) Int. Cl.: H04M 3/46, H04M 3/54

(54) **Verfahren und System zur Durchführung einer Kommunikation in einem Telekommunikationsnetzwerk**

(30) Priorität: 24.08.2006 DE 102006039664
(71) Anmelder: Deutsche Telekom AG, 53113 Bonn (DE)
(72) Erfinder: Daussmann, Frank, 67454 Hassloch (DE); Trinkel, Marian, 52372 Kreuzau OT Untermaubach (DE)

(57) **Zusammenfassung**

Die Erfindung betrifft ein Verfahren zur Durchführung einer Kommunikation in einem Telekommunikationsnetzwerk, bei dem von einem Kommunikationsteilnehmer eine erste Netzwerkkennung durch Anwahl vorgegeben wird, bei dem die vorgegebene Netzwerkkennung einer Wahrscheinlichkeitsprüfung unterzogen wird, wobei in Abhängigkeit der ermittelten Wahrscheinlichkeit die vorgegebene erste Netzwerkkennung bestätigt oder wenigstens eine zweite alternative Netzwerkkennung vorgeschlagen oder unmittelbar angewählt wird. Die Erfindung betrifft weiterhin ein System zur Durchführung einer Kommunikation in einem Telekommunikationsnetzwerk, bei dem von einem Kommunikationsteilnehmer eine erste Netzwerkkennung durch Anwahl vorgegeben wird, bei dem das Telekommunikationsnetz eine Einheit umfasst, mit der die vorgegebene Netzwerkkennung einer Wahrscheinlichkeitsprüfung unterzogen wird, wobei in Abhängigkeit der ermittelten Wahrscheinlichkeit die vorgegebene erste Netzwerkkennung bestätigbar oder wenigstens eine zweite alternative Netzwerkkennung vorschlagbar oder unmittelbar anwählbar ist.

## Beschreibung

Die Erfindung betrifft ein Verfahren und ein System zur Durchführung einer Kommunikation in einem Telekommunikationsnetzwerk, bei dem von einem Kommunikationsteilnehmer eine erste Netzwerkkennung durch Anwahl vorgegeben wird.

Eine solche Art von Kommunikation ist im Stand der Technik bekannt. Bezogen auf das Telefonfestnetz bzw. auf das Mobilfunknetz ist es beispielsweise bekannt, dass ein Kommunikationsteilnehmer mit seinem Telefon die Rufnummer eines gewünschten anderen Telekommunikationsgerätes anwählt, um mit einer Person seiner Wahl verbunden zu werden. Diese Art der Kommunikation ist dabei nicht auf die vorgenannten Telekommunikationsnetzwerke beschränkt, sondern üblich für jegliche Telekommunikationsart, beispielsweise auch im Internet bei der Versendung von e-mails, wofür ein Telekommunikationsteilnehmer ebenso eine erste Netzwerkkennung eines Adressaten durch Anwahl vorgibt, insbesondere eine IP-Adresse.

Die auf diese Art und Weise in das Telekommunikationssystem übermittelte erste Netzwerkkennung wird sodann üblicherweise von einer Vermittlungsstelle ausgewertet und der Kommunikationskanal zu der angewählten ersten Netzwerkkennung durchgeschaltet, sofern möglich..

Hierbei kann es vorkommen, dass die von einem Kommunikationsteilnehmer vorgegebene erste Netzwerkkennung dem System nicht bekannt ist, so dass der Kommunikationsteilnehmer üblicherweise vom System einen entsprechenden Hinweis erhält. Im Bereich der Festnetz- bzw. Mobiltelefonie erhält der Kommunikationsteilnehmer beispielsweise eine Ansage, dass die gewünschte Rufnummer nicht vergeben ist. Im Bereich des Internets beispielsweise erhält der Kommunikationsteilnehmer eine e-mail als Rückmeldung, dass seine Nachricht an die gewünschte Netzwerkkennung nicht adressierbar war und somit nicht zugestellt wurde.

Neben einer derartigen Fehlleitung, bei der der Kommunikationsteilnehmer unmittelbar bzw. gegebenenfalls zeitlich verzögert informiert wird, kann es auch vorkommen, dass eine angewählte erste Netzwerkkennung zwar grundsätzlich existiert, jedoch nicht das Telekommunikationsgerät des gewünschten Adressaten bezeichnet, beispielsweise weil eine Fehlinformation bei der Netzwerkkennung vorliegt oder versehentlich die Netzwerkkennung durch den Kommunikationsteilnehmer falsch eingegeben wurde.

Dies kann dazu führen, dass ein Kommunikationsteilnehmer, der eine solche erste Netzwerkkennung durch Anwahl vorgibt, falsch verbunden wird, was er bei einer Kommunikation durch Telefonie üblicherweise dadurch feststellt, dass an der Gegenstelle eine nicht erwartete Person das Gespräch annimmt. Im Bereich der Kommunikation im Internet, beispielsweise bei e-mails, kann es sodann vorkommen, dass eine e-mail an einen falschen Adressaten zugestellt wird, worüber der Absender üblicherweise keine Information erhält, da dem übermittelnden Telekommunikationsnetzwerk eine Fehlzustellung nicht bewusst ist.

Es ist im Stand der Technik weiterhin das Problem bekannt, dass beispielsweise die von einem Kommunikationsteilnehmer durch Anwahl vorgegebene erste Netzwerkkennung zwar grundsätzlich korrekt ist, um die gewünschte Person zu erreichen, jedoch aktuell eine Erreichbarkeit der Person unter dieser Netzwerkkennung nicht gegeben ist. Beispielsweise ist dies häufig im Mobilfunknetz der Fall, wenn die gewünschte Person das Mobiltelefon ausgeschaltet hat. Es besteht sodann oftmals nur die Möglichkeit, eine Nachricht auf der Mailbox zu hinterlassen oder aber es erfolgt eine Ansage, dass die gewünschte Person unter der Rufnummer aktuell nicht zu erreichen ist.

Aufgabe der Erfindung ist es daher, ein Verfahren und ein System bereitzustellen, mittels dem solche, z.B. oben beschriebene Nicht- oder Fehlvermittlungen vermieden werden.

Gemäß der Erfindung wird die vorbeschriebene Aufgabe durch ein Verfahren gelöst, bei dem die vorgegebene Netzwerkkennung einer Wahrscheinlichkeitsprüfung unterzogen wird und wobei in Abhängigkeit der ermittelten Wahrscheinlichkeit die vorgegebene erste Netzwerkkennung bestätigt oder wenigstens eine zweite alternative Netzwerkkennung vorgeschlagen oder unmittelbar angewählt wird.

Die Aufgabe wird weiterhin durch ein System der eingangs genannten Art gelöst, bei dem das Telekommunikationsnetz eine Einheit umfasst, mit der die vorgegebene Netzwerkkennung einer Wahrscheinlichkeitsprüfung unterzogen wird und wobei in Abhängigkeit der ermittelten Wahrscheinlichkeit die vorgegebene erste Netzwerkkennung bestätigbar oder wenigstens eine zweite alternativ Netzwerkkennung vorschlagbar oder unmittelbar anwählbar ist.

Wesentlicher Kerngedanke der Erfindung ist es, dass ein Telekommunikationsnetzwerk nicht wie bisher in üblicher Weise die durch einen Kommunikationsteilnehmer vorgegebene angewählte Netzwerkkennung übernimmt und versucht, zu dieser Netzwerkkennung eine Verbindung zu etablieren, sondern dass vor einem Versuch, eine Verbindung zu der angegebenen ersten Netzwerkkennung durchzuführen eine Überprüfung dahingehend stattfindet, wie wahrscheinlich eine Verbindung zu der angegebenen Netzwerkkennung zu einer erfolgreichen bzw. gewünschten Verbindung führt.

Dabei kann eine Netzwerkkennung auch eine Kommunikationsadresse (z.B: CLI (Calling Line Identity), HLR (Home-Location Register), IP-Adresse(Internet-Protocol-Adresse)) sein mit oder ohne eine oder mehrere Gerätekennungen. Weiterhin können über die Netzwerkkennung weitere Parameter wie zum Beispiel Sprecher, Sprecherstimme, Sprecheräußerungen ermittelt und übertragen werden.

Hierbei kann unter der Wahrscheinlichkeitsprüfung im Sinne der Erfindung beispielsweise verstanden werden, dass die Wahrscheinlichkeit geprüft wird, ob die angegebene, durch den Kommunikationsteilnehmer gewählte Netzwerkkennung korrekt ist bzw. zu dem zweiten Kommunikationsteilnehmer führt, den der erste anwählende Kommunikationsteilnehmer tatsächlich kontaktieren möchte. Unter einer Wahrscheinlichkeitsprüfung im Sinne der Erfindung kann weiterhin verstanden werden, dass die Wahrscheinlichkeit überprüft wird, inwieweit die angewählte Netzwerkkennung technisch tatsächlich erreichbar ist. Die Wahrscheinlichkeitsprüfung im Sinne der Erfindung ist nicht auf die vorgenannten konkreten Arten der Wahrscheinlichkeitsprüfung beschränkt, sondern grundsätzlich kann eine Wahrscheinlichkeit zu einem jeglichen vorgebbaren Kriterium überprüft werden.

Es kann sodann erfindungsgemäß vorgesehen sein, dass in Abhängigkeit von der ermittelten Wahrscheinlichkeit in einem ersten Fall die vorgegebene erste Netzwerkkennung bestätigt wird. Dieser Fall wird üblicherweise dann auftreten, wenn die ermittelte Wahrscheinlichkeit derart ausfällt, dass davon auszugehen ist, dass die durch Anwahl vorgegebene Netzwerkkennung zu einem erfolgreichen Verbindungsaufbau führt, insbesondere also, dass die richtige Netzwerkkennung angegeben wurde oder aber dass die angegebene Netzwerkkennung tatsächlich aktuell erreichbar ist. Dieser Fall der Bestätigung kann beispielsweise eintreten, wenn die Wahrscheinlichkeit einen gewissen Wahrscheinlichkeitsgrenzwert überschreitet oder gegebenenfalls die Wahrscheinlichkeit sogar zu eins bzw zu 100% ermittelt wird.

In einem anderen Fall kann es vorgesehen sein, dass in Abhängigkeit der ermittelten Wahrscheinlichkeit, insbesondere wenn die ermittelte Wahrscheinlichkeit einen bestimmten Grenzwert unterschreitet oder Null ist, wenigstens eine zweite alternative Netzwerkkennung vorgeschlagen oder unmittelbar angewählt wird.

Wird somit im Rahmen des erfindungsgemäßen Verfahrens, z.B. durch das erfindungsgemäße System festgestellt, dass die ermittelte Wahrscheinlichkeit eine bestimmte Grenzewahrscheinlichkeit unterschreitet oder Null ist, so kann es vorgesehen sein, dass dem Telekommunikationsteilnehmer, der diese erste Netzwerkkennung angewählt hat, eine Information hierüber übermittelt wird, z.B. durch einen Rückfragedialog, der im Rahmen einer Telefonie, z.B. durch einen Sprachdialog ausgeführt werden kann, der automatisch, z.B. durch eine Vermittlungseinheit, initiiert wird oder der beispielsweise bei einer e-mail-Kommunikation nach dem Absenden der e-mail durch eine Rückfrage-e-mail ausgeführt wird.

Hierbei kann es sodann vorgesehen sein, dass im Rahmen dieses Rückfragedialogs der Kommunikationsteilnehmer die Anwahl der ersten Netzwerkkennung bestätigt, so dass hierdurch die Wahrscheinlichkeitsprüfung überwunden wird und das System somit im Anschluss daran die ausgewählte Netzwerkkennung tatsächlich anwählt, um den Kommunikationskanal zu dieser Netzwerkkennung zu öffnen.

Es kann weiterhin vorgesehen sein, dass im Rahmen eines Rückfragedialogs wenigstens eine, gegebenenfalls auch mehrere zweite alternative Netzwerkkennungen vorgeschlagen werden, die gemäß der Wahrscheinlichkeitsprüfung des erfindungsgemäßen Verfahrens mit einer höheren Wahrscheinlichkeit zu einer Etablierung eines gewünschten Kommunikationskanals, beispielsweise mit einer bestimmten Person, führt.

Statt der Durchführung eines Vorschlags, z.B. im Rahmen eines Rückfragedialogs, kann es erfindungsgemäß auch vorgesehen sein, dass wenigstens eine zweite alternative Netzwerkkennung unmittelbar angewählt wird und statt der ersten angewählten Netzwerkkennung der Kommunikationskanal sofortig mit einem Kommunikationsgerät geöffnet wird, welches der zweiten ermittelten Netzwerkkennung zugeordnet ist.

Insbesondere für den Fall, dass im Rahmen der erfindungsgemäßen Wahrscheinlichkeitsprüfung eine Wahrscheinlichkeit ermittelt wird, gemäß der die erste von dem Kommunikationsteilnehmer angewählte Netzwerkkennung voraussichtlich nicht korrekt oder erreichbar ist, kann es vorgesehen sein, dass die wenigstens eine zweite alternative Netzwerkkennung, die erfindungsgemäß vorgeschlagen oder angewählt wird, zunächst ebenso einer Wahrscheinlichkeitsprüfung unterzogen wird, insbesondere derselben Wahrscheinlichkeitsprüfung, um sodann zu überprüfen, ob die alternativ durch das System bzw. verfahrensgemäß vorgeschlagene Netzwerkkennung eine höhere Wahrscheinlichkeit aufweist insbesondere eine Wahrscheinlichkeit über einem bestimmten Grenzwert, um den von der anwählenden Person tatsächlich gewünschten Kommunikationskanal öffnen zu können.

Hierbei kann es gegebenenfalls vorgesehen sein, dass eine derartige wiederholte Wahrscheinlichkeitsprüfung iterativ durchgeführt wird. Das bedeutet, dass in dem Fall, wenn auch die zweite vorgeschlagene alternative Netzwerkkennung in der Wahrscheinlichkeitsprüfung ein Wahrscheinlichkeitsergebnis liefert, gemäß dem wiederum auch die zweite Netzwerkkennung nicht zu der gewünschten Kommunikation führt, also z.B. einen Wahrscheinlichkeitsgrenzwert unterschreitet, wiederum eine nächste alternative. Netzwerkkennung vorgeschlagen oder unmittelbar angewählt wird, die zuvor ebenso einer Wahrscheinlichkeitsprüfung, insbesondere derselben Wahrscheinlichkeitsprüfung unterzogen wird.

Dieses iterative Prüfen auf Wahrscheinlichkeit kann dabei erfindungsgemäße solange durchgeführt werden, bis die Wahrscheinlichkeit, einen bestimmten vorgebbaren Grenzwert überschreitet oder aber bis ein Zeitkriterium erfüllt ist, beispielsweise bis dass eine vorgebbare Iterationszeit überschritten wird.

Insbesondere das Vorsehen eines Abbruchs nach einem bestimmten Zeitkriterium kann sinnvoll sein, um im Telekommunikationssystem eine Vermittlung innerhalb vorgegebener Zeitspannen zu ermöglichen und zu verhindern, dass sich im Fall einer Nichtkonvergenz, also dass sich bei wiederholten Wahrscheinlichkeitsprüfungen keine Wahrscheinlichkeiten für eine erfolgreiche Kommunikation ergeben (unterhalb eines Grenzwertes bleiben), sich das System in einer Endlosschleife verliert.

Es kann sodann vorgesehen sein, dass z.B. bei einem Abbruch der Iteration nach einem Zeitkriterium der erste anwählende Telekommunikationsteilnehmer darüber informiert wird, dass eine angewählte Netzwerkkennung voraussichtlich nicht zu einer Kommunikationsverbindung mit der gewünschten Person führen wird. Gegebenenfalls kann auch der Abbruch der Vermittlung zu dieser ersten angegebenen Netzwerkkennung erfolgen oder die Vermittlung ohne Rückfrage zu der gewählten Netzwerkkennung erfolgen.

Die vorgenannte Wahrscheinlichkeitsprüfung kann z.B. in einer Ausführung der Erfindung in Abhängigkeit einer Netzwerkkennung eines anwählenden Kommunikationsgerätes durchgeführt werden. Üblich ist es, für im Wesentlichen jedes Tetekommunikationsnetzwerk, dass ein in das Telekommunikationsnetzwerk eingebundenes Telekommunikationsgerät, wie z.B. ein Festnetztelefon (CLI, Calling Line Identity), ein Mobiltelefon (HLR, Home Location Register) oder ein Computer (IP-Adresse) im Internet, selbst eine zugeordnete Netzwerkkennung aufweist, die beim Aufbau einer Kommunikationsverbindung zu einem anderen Kommunikationsgerät an das Telekommunikationsnetzwerk übermittelt wird.

Gegebenenfalls können auch weitere Kennungen eines Kommunikationsgerätes übermittelt und der Wahrscheinlichkeitsprüfung zugrunde gelegt werden. So kann eine Wahrscheinlichkeitsprüfung somit nicht nur in Abhängigkeit einer Netzwerkkennung, sondern gegebenenfalls in Abhängigkeit jeglicher, durch ein Kommunikationsgerät in das Netzwerk übermittelter Kennungen durchgeführt werden. Hierbei kann es sich um die Kennungen neben den vorgenannten Netzwerkkennungen auch um Gerätekennungen (z.B. die IMEI bei Mobiltelefonen, eine SIM-Kartennummer oder sonstige Gerätenummer handeln.

So kann es beispielsweise in der vorgenannten Ausführung vorgesehen sein, dass einer Netzwerkkennung eines anwählenden Kommunikationsgerätes eine Datenbank und/oder Datenmatrix zugeordnet ist mit einer Vielzahl von Netzwerkkennungen, wobei die angewählte Netzwerkkennung mit den in der Datenbank/Datenmatrix gespeicherten Netzwerkkennungen verglichen wird. In Abhängigkeit des Ergebnisses des Vergleichs kann sodann eine Entscheidung darüber getroffen werden, ob die angewählte erste Netzwerkkennung für den Kommunikationsaufbau beibehalten wird oder gegebenenfalls eine zweite alternative Netzwerkkennung vorgeschlagen bzw. unmittelbar angewählt wird. Das Ergebnis des Vergleichs kann dabei im Sinne der Erfindung als eine Wahrscheinlichkeit verstanden werden.

So kann es erfindungsgemäß vorgesehen sein, dass nach dem Vergleich die erste vorgegebene Netzwerkkennung bestätigt wird, wenn diese bereits in der Datenbank bzw. Datenmatrix gespeichert ist. In einem solchen Fall liefert der Vergleich ein 100%iges Vergleichsergebnis (Wahrscheinlichkeitsergebnis), aus dem geschlossen werden kann, dass der Telekommunikationsteilnehmer tatsächlich die angewählte Netzwerkkennung benutzen möchte, um die Kommunikation zu etablieren.

Dieses kann insbesondere dann gefolgert werden, wenn es sich bei der Datenbank bzw. Datenmatrix z.B. um die Ansammlung sämtlicher Netzwerkkennungen handelt von Personen bzw. zugeordneten Kommunikationsgeräten; mit denen der anwählende Kommunikationsteilnehmer in jeglicher Art von Beziehung steht, z.B. persönlicher oder geschäftlicher Beziehung. So kann es sich beispielsweise bei der vorgenannten Datenbank bzw. Datenmatrix um ein sogenanntes Adressbuch bzw. Telefonbuch handeln.

Wird hingegen in einer solchen Datenbank die gesuchte angewählte Netzwerkkennung weder identisch aufgefunden noch eine andere Netzwerkkennung gefunden, die eine ausreichende Ähnlichkeit (Ähnlichkeit oberhalb eines Ähnlichkeitsgrenzwertes) zu der angewählten Netzwerkkennung aufweist, so kann es vorgesehen sein, dass die Wahrscheinlichkeit ebenso zu 100% eingeschätzt wird, da das System davon ausgehen kann, dass es sich um eine neue, bislang noch nie angewählte Netzwerkkennung handelt, zu der der Kommunikationsteilnehmer eine Verbindung aufbauen möchte und z.B. nicht um eine Netzwerkkennung, bei der versehentlich ein Fehler bei der Eingabe aufgetreten ist.

Hierbei kann unter einer Ähnlichkeit der vorgenannten Art beispielsweise verstanden werden, dass eine Netzwerkkennung eine mehr oder weniger große Übereinstimmung mit anderen gespeicherten Netzwerkkennungen aufweist (Teilübereinstimmung der Zahlen/Ziffernfolge), wobei von einer Ähnlichkeit ausgegangen wird, wenn der Grad der Übereinstimmung einen bestimmten Grenzwert überschreitet. Ein solcher Grenzwert kann beispielsweise durch das System oder einen Nutzer, beispielsweise einen Telekommunikationsteilnehmer, vorgegeben sein. Beispielsweise kann von einer Ähnlichkeit gesprochen werden, wenn die Übereinstimmung zwischen der angewählten Netzkennung und einer in der Datenbank/Datenmatrix gespeicherten Netzkennung größer als 50% ist; also z.B. mit Bezug auf Telefonnummern mehr als 50% der angewählten Zahlen bei einer anderen gespeicherten Netzwerkkennung aufgefunden wird.

Wird in dem vorbeschriebenen Fall somit die angewählte Netzwerkkennung weder identisch noch ähnlich aufgefunden, so kann die angewählte vorgegebene Netzwerkkennung in der Datenmatrix anschließend gespeichert werden und steht somit für spätere Vergleiche zur Verfügung.

In einem anderen Fall kann es vorgesehen sein, dass die erste vorgegebene Netzwerkkennung verworfen und wenigstens eine zweite alternative Netzwerkkennung vorgeschlagen oder unmittelbar angewählt wird, wenn die erste Netzwerkkennung nicht identisch, aber eine ähnliche Netzwerkkennung gefunden wird. Hierbei kann es vorgesehen sein, dass eine zweite alternative Netzwerkkennung erst dann vorgeschlagen wird, wenn ein gewisser Grad an Ähnlichkeit (Teilübereinstimmung der Zahlen-/Ziffernfolge) überschritten wird, z.B. eine Ähnlichkeit von mehr als 50% der gewählten Zahlen oder Ziffern in einer Netzwerkkennung.

Es kann sodann vorgesehen sein, dass gemäß dem erfindungsgemäßen Verfahren diejenige Netzwerkkennung, die mit der angewählten Netzwerkkennung die größte Ähnlichkeit aufweist, für einen Vorschlag als alternative zweite Netzwerkkennung verwendet wird oder unmittelbar angewählt wird. Hierüber kann der Telekommunikationsteilnehmer gegebenenfalls während des Verbindungsaufbaus unterrichtet werden, so dass dem Kommunikationsteilnehmer die Möglichkeit offen steht, den eingeleiteten Kommunikationsaufbau gegebenenfalls noch selbst zu unterbrechen. Es kann hierfür vorgesehen sein, dass während des Telekommunikationsaufbaus zu der zweiten alternativen Netzwerkkennung der Kommunikationsteitnehmer über die Netzwerkkennung informiert wird, so dass er entscheiden kann; ob die zweite alternativ angewählte Netzwerkkennung von ihm statt der angewählten ersten Netzwerkkennung tatsächlich gewünscht wird.

Durch die vorgenannte Ausführung des erfindungsgemäßen Verfahrens kann es somit vermieden werden, dass bei Fehleingaben der ersten angewählten Netzwerkkennung, z.B. bei einem Vertippen durch den Kommunikationsteithehmer, eine Fehlverbindung aufgebaut wird, da das erfindungsgemäße Verfahren in der Lage ist, durch einen Vergleich mit den gespeicherten Netzwerkkennungen in der Datenbank festzustellen, dass es sich mit einer hohen Wahrscheinlichkeit nicht um eine gewünschte Netzwerkkennung handelt, sondern die Netzwerkkennung durch eine andere gespeicherte Netzwerkkennung zu ersetzen ist, um zu dem gewünschten Kommunikationsziel zu gelangen. Typische Eingabefehler bei Netzwerkkennungen können somit erfindungsgemäß vermieden werden, so dass ärgerliche Fehlvermittlungen zur nicht gewünschten Person und die damit entstehenden Verbindungskosten unterbleiben.

In einer anderen Ausführung, die mit sämtlichen vorgenannten Ausführungen kombinierbar ist, kann es auch vorgesehen sein, dass bei der Wahrscheinlichkeitsprüfung geprüft wird, ob die angewählte erste Netzwerkkennung aktuell technisch erreichbar ist. Wie eingangs erwähnt, kann es vorkommen, dass z.B. ein Kommunikationsteilnehmer eine Mobilrufnummer eines zweiten Kommunikationsteilnehmers anwählt und nur die Ansage erhält, dass dieser aktuell nicht erreichbar ist, offensichtlich weil die Zielperson das entsprechende Mobiltelefon ausgeschaltet hat.

Es kann somit gemäß der Erfindung vorgesehen sein, dass im Rahmen einer Wahrscheinlichkeitsprüfung festgestellt wird, wie die Wahrscheinlichkeit ist, die erste angewählte Netzwerkkennung tatsächlich erreichen zu können. Hierbei wird im Falle einer Erreichbarkeit, d.h. insbesondere bei einer 100% Wahrscheinlichkeit der Erreichbarkeit die erste Netzwerkkennung bestätigt und angewählt, wobei es vorgesehen sein kann, dass im Fall der Nichterreichbarkeit, also insbesondere bei 0% Wahrscheinlichkeit oder bevorzugt bereits bei einer Wahrscheinlichkeit unterhalb einer Grenzwahrscheinlichkeit wenigstens eine zweite alternative Netzwerkkennung vorgeschlagen oder unmittelbar angewählt wird.

So kann es erfindungsgemäß vorgesehen sein, dass im Telekommunikationssystem eine Information darüber vorgehalten wird, ob Netzwerkkennungen, selbst wenn sie vergeben, also einer Person wirksam zugeordnet sind, tatsächlich aktuell technisch erreichbar sind oder nicht. Eine derartige Information kann durch das erfindungsgemäße Verfahren abgefragt werden, um hieraus eine Wahrscheinlichkeit über die Erreichbarkeit oder Nichterreichbarkeit zu bilden und demnach erfindungsgemäß vorzugehen.

Beispielsweise kann es sein, dass einer vorgegebenen ersten Netzwerkkennung eine Datenbank und/oder Datenmatrix zugeordnet ist, welche alternative Netzwerkkennungen umfasst. Beispielsweise können in einer solchen Datenbank oder Datenmatrix für eine Person sämtliche Netzwerkkennungen niedergelegt sein, hinter denen die Person grundsätzlich durch Telekommunikation erreichbar ist. Beispielsweise kann es sich hierbei um eine Festnetztelefonnummer, z.B. eine Mobiltelefonnummer, eine e-mail-Adresse, eine Internet-Webseite, eine Voice Over IP-Kennung oder jegliche sonstige Netzwerkkennung handeln. Einem solchen Eintrag in einer vorgenannten Datenbank oder Datenmatrix kann weiterhin eine Information zugeordnet sein, ob die grundsätzliche Erreichbarkeit über diese vorgenannten Kennungen auch tatsächlich aktuell gegeben ist. Hat also beispielsweise eine Person ein Mobiltelefon, ist dieses jedoch ausgeschaltet, so findet sich in der Datenbank ein Eintrag über diese Netzwerkkennung, jedoch mit einem Negativvermerk bezüglich der aktuellen Erreichbarkeit unter dieser Kennung.

Im Rahmen der Erfindung kann es somit erreicht werden, dass bei Anwahl einer ersten Netzwerkkennung, zu der in der vorgenannten Datenbank ein Negativeintrag über die Erreichbarkeit eingetragen ist, somit die Erreichbarkeitswahrscheinlichkeit zu 0 bestimmt wird und demnach durch das System eine in der Datenbank alternativ aufgelistete Netzwerkkennung vorgeschlagen oder unmittelbar angewählt wird. Bei der alternativen Netzwerkkennung kann es sich entweder um die in der Datenbankliste nächste Netzwerkkennung handeln, wobei es dann vorgesehen sein kann, die Wahrscheinlichkeit, d.h. die Erreichbarkeitsprüfung zu dieser zweiten bestimmten Netzwerkkennung wiederum durchzuführen.

Auch hier kann gegebenenfalls ein Negativeintrag bezüglich der Erreichbarkeit vorliegen, so dass dann das erfindungsgemäße Verfahren mit dem wiederum nächsten Eintrag in der Liste fortfährt. Alternativ kann es auch vorgesehen sein, dass in der zugeordneten Datenbank oder Datenmatrix sofortig nach einer alternativen Netzwerkkennung gesucht wird, zu der eine Erreichbarkeit entsprechend markiert ist. Eine solche ermittelte Netzwerkkennung kann sodann als zweite alternative Netzwerkkennung vorgeschlagen oder unmittelbar angewählt werden.

Dabei kann der Negativ-Eintrag auch immer wieder aktualisiert werden, je nach Servicepriorität, Servicelevel, indem ein automatisiertes System immer versucht die Verbindung herzustellen, z.B. durch einen Dailer oder innerhalb des Netzes durch eine Signalisierung. Nach erfolgreicher Verbindung wird der negative Eintrag z.B. in der Datenbank weggenommen und z.B. der Kunde wird informiert.

Das erfindungsgemäße Verfahren hat in der vorgenannten Ausgestaltung somit den Vorteil, dass ein Kommunikationsteilnehmer nicht zwingend alle Möglichkeiten durchprobieren muss, um einen gewünschten zweiten Kommunikationsteilnehmer im Rahmen einer Kommunikation erreichen zu können. Es ist ausreichend, eine der dem ersten Kommunikationsteilnehmer bekannten Netzwerkkennung zum Erreichen einer zweiten Person anzuwählen, woraufhin das erfindungsgemäße Verfahren bzw. System automatisch bei einer eventuellen Nichterreichbarkeit unter dieser angegebenen Netzwerkkennung eine alternative Netzwerkkennung vorschlägt oder anwählt.

In einer anderen Ausgestaltung der Erfindung, die mit allen vorangenannten kombinierbar ist, kann es vorgesehen sein, dass eine erste angewählte Netzwerkkennung und/oder eine Netzwerkkennung des anwählenden Kommunikationsgerätes und/oder die Identität einer das anwählende Kommunikationsgerät benutzenden Person eine Eingangsgröße einer Konversionsfunktion bildet, deren Ausgangsgröße die erste oder wenigstens eine zweite alternative Netzwerkkennung bildet. Bezogen auf die vorherigen konkreten Ausgestaltungen kann die Konversionsfunktion durch die lNahrscheinlichkeitsprüfung und eine als Ergebnis vorgeschlagene oder angewählte alternative Netzwerkkennung sein.

Es kann somit vorgesehen sein, dass nach dem erfindungsgemäßen Verfahren bzw. in einem erfindungsgemäßen System eine Konversionsfunktion durchgeführt wird mit wenigstens einer, gegebenenfalls mehreren Eingangsgrößen, wobei die Konversionsfunktion eine Ausgangsgröße bildet, die der ersten angewählten Netzwerkkennung entspricht und diese somit erfindungsgemäß bestätigt oder aber deren Ausgangsgröße die wenigstens eine zweite alternative Netzwerkkennung bildet, die vorgeschlagen oder unmittelbar angewählt werden kann.

Eine solche erfindungsgemäß verwendete Konversionsfunktion kann demnach intern eine Wahrscheinlichkeitsprüfung durchführen anhand der Eingangsgrößen und ohne Bekanntgabe der ermittelten Wahrscheinlichkeit, insbesondere da diese gegebenenfalls für jeden Dritten uninteressant ist, eine entsprechende Ausgangsgröße zur Verfügung stellen.

Hierbei kann es vorgesehen sein, dass die Konversionsfunktion als Eingangsgröße z.B. die angewählte Netzwerkkennung verwendet, wie dies beispielsweise an den konkreter ausgestalteten Ausbildungen der vorgenannten Art erläutert wurde. Es kann dabei auch weiterhin oder alternativ vorgesehen sein, dass die Netzwerkkennung eines anwählenden Kommunikationsgerätes oder allgemeiner jeglicher Art von Kennung eines anwählenden Kommunikationsgerätes verwendet wird als Eingangsgröße, die von dem anwählenden Kommunikationsgerät zur Verfügung gestellt wird. Hierzu wird auf obige Ausführungen verwiesen. Es kann sich somit beispielsweise bei Festnetztelefonen um die CLl, bei Internetcomputern um eine IP-Adresse, bei Mobiltelefonen um das HLR (Home Location Register) oder z.B. die IMEI, d.h. die Gerätekennung oder eine SIM-Kartennummer handeln.

Da gegebenenfalls mehrere Personen, wie beispielsweise bei Festnetztelefonanschlüssen dasselbe Kommunikationsgerät wählen, kann es auch vorgesehen sein, dass neben einer Netzwerkkennung des anwählenden Kommunikationsgerätes auch oder alternativ die Identität einer das anwählende Kommunikationsgerät benutzenden Person als Eingangsgröße zu der vorgenannten Konversionsfunktion bildet.

Die Identität einer Person kann dabei auf verschiedene Arten und Weisen festgestellt werden, beispielsweise wie vorgenannt anhand einer Kennung des anwählenden Kommunikationsgerätes, wodurch gegebenenfalls nur der Personenkreis eingeschränkt wird und gegebenenfalls ergänzend durch personenidentifizierende Maßnahmen, wie Eingaben von Identifikationsnummern (PIN), Durchführung einer Spracherkennung unmittelbar am Kommunikationsgerät oder Abfrage sonstiger biometrischer Daten einer benutzenden Person, insbesondere wenn ein Kommunikationsgerät Erkennungsvorrichtungen für biometrische Daten aufweist, wie beispielsweise Iris- oder Fingerabdrucksscanner.

Mit wenigstens einer oder mehrerer oder aller der vorgenannten Eingangsgrößen kann somit eine Konversionsfunktion aufgerufen werden, um die angewählte Netzwerkkennung zu bestätigen oder eine alternative Netzwerkkennung vorzuschlagen oder anzuwählen.

Hierbei kann es unter Rückgriff auf die vorgenannten Ausführungen auch hier vorgesehen sein, dass die Ausgangsgröße einer Konversionsfunktion die Eingangsgröße einer anderen oder derselben Konversionsfunktion bildet, insbesondere solange, bis die Konversion konvergiert oder ein Zeitkriterium überschritten ist. Hierbei kann unter der Konvergenz verstanden werden, dass intern in der Konversionsfunktion entweder eine Wahrscheinlichkeit gebildet wird, die sich von einer zur nächsten iterativen Durchführung der Konversion nicht mehr ändert oder die eine bestimmte Grenzwahrscheinlichkeit überschreitet. Alternativ kann bezüglich des Zeitkriteriums verstanden werden, dass die Iteration der Konversionsfunktion nach Überschreiten einer gewissen Grenzzeit abgebrochen wird, in Analogie der bereits vorbeschriebenen Ausgestaltungen.

Ebenso kann auch ein Medienbruch überwunden werden, indem z.B. das Netz eine oder mehrere parallele Kommunikationen aufbaut zu zwei oder mehreren möglichen Netzkennungen und die Verbindung aufbaut und die Sprecher der Netzkennung sprachlich ermittelt und diese in der Wahrscheinlichkeit der Netzkennung mitberücksichtigt. Das heißt: meldet sich z.B. die falsche Stimme an der Netzkennung, insbesondere mit der höchsten Wahrscheinlichkeit, wird diese zurückgestuft und meldet sich die richtige Stimme an der Netzkennung, insbesondere mit einer geringeren Wahrscheinlichkeit, wird diese Wahrscheinlichkeit der Netzkennung hoch gesetzt.

Die Ermittlung der Sprecher kann vor der Verbindung zum Anrufer mittelt eines Sprachdialoges erfolgen - nachdem die Bewertung erfolgt wird die Kommunikationsverbindung erst dann zum Anrufer weitergeschaltet.

Beispiel: Der Kunde A ruft Netzkennung B an und möchte den Kunden, Stimme B kommunizieren. Das System ermittelt die Wahrscheinlichkeit der Netzkennung B und C und baut zu beiden Netzkennungen eine Verbindung auf. Nun meldet sich an der Netzkennung B die Stimme C und an der Netzkennung C die Stimme B. z.B. mit der sprachlichen Äußerung "Ja bitte", "Hallo". Dieses Äußerung wird bewertet und das System erkennt, das der Kunde A zwar die Netzkennung B verlangt, aber eigentlich den Sprecher B meint - und schaltet nachdem der Sprecher B sich auf der Netzkennung C gemeldet hat mit "Ja bitte" erst dann die Verbindung zum Kunden A durch. Die Netzkennung B mit dem Sprecher C wird abgebaut und erhält z.B. eine sprachliche Entschuldigung, dass ein anderer Kommunikationsteilnehmer gemeint war.

In einer bevorzugten Ausbildung kann es dabei vorgesehen sein, dass eine Konversionsfunktion als eine n-dimensionale Matrix ausgebildet ist, in der die Einträge von n-Datenbanken miteinander verknüpft sind. Es besteht so die Möglichkeit, ein wissensbasiertes Datenbanksystem anhand einer solchen Matrix auszubilden, in der Verknüpfungen der verschiedenen Datenbanken gespeichert sind, beispielsweise dadurch, dass bestimmte Zellen einer Matrix bestimmte: Werte aufweisen. So kann eine Verknüpfung beispielsweise dadurch erstellt werden, dass ein an x-ter Stelle einer Datenbank stehender Eintrag mit einem an y-ter Stelle einer anderen Datenbank stehender Eintrag verknüpft ist dadurch, dass in der Matrix an der Stelle x,yein die Verknüpfung anzeigender Wert oder Parameter gespeichert ist. Dieses mit Bezug auf eine zweidimensionale Matrix genannte Beispiel kann dabei grundsätzlich auf n-dimensionale Matrizen verallgemeinert werden, in denen die Informationen von grundsätzlich beliebig vielen Datenbanken miteinander verknüpft sein können.

Es kann somit gemäß der Erfindung vorgesehen sein, dass einer der vorgenannten Eingangsgrößen für eine derartige n-dimensionale bzw beliebig dimensionale Matrix verwendet werden, um im Rahmen des erfindungsgemäßen Verfahrens nachsehen zu können, mit welchen Einträgen aus anderen Datenbanken die jeweils verwendete Eingangsgröße eine Verknüpfung aufweist. Anhand dieser möglichen Verknüpfungen und den somit anderen zugeordneten Informationen können sodann Wahrscheinlichkeiten abgeschätzt werden, mit denen die anwählende Person diese oder gegebenenfalls eine andere Netzwerkkennung gemeint hat.

Hierbei kann es gemäß der Erfindung vorgesehen sein, dass der Inhalt einer Konversionsmatrix zumindest teilweise sperrbar und/oder zumindest teilweise freischaltbar ist. So können hierdurch sensible Daten innerhalb einer Konversionsmatrix beispielsweise von einer allgemeinen Zugänglichkeit ausgeschlossen werden und/oder nur für bestimmte Personenkreise zugänglich sein. Gegebenenfalls kann es auch hier vorgesehen sein, dass bestimmte Bereiche einer Konversionsmatrix erst gegen Entgelt für die Nutzung freigeschaltet werden. So können gegebenenfalls auch Zuverlässigkeitsstufen des erfindungsgemäßen Verfahrens von einem Telekommunikationsanbieter an seine Kunden verkauft werden, wobei ein System oder ein Verfahren bereitgestellt wird, welches in Abhängigkeit eines Entgeltes einen unterschiedlichen Grad an Zuverlässigkeit bei der Durchführung des erfindungsgemäßen Verfahrens bietet, je nachdem in welchem Umfang eine zugrunde liegende Konversionsmatrix freigeschaltet wird oder gesperrt verbleibt.

Die Ermittlung der Matrix kann z.B. automatisiert über Suchmaschinen z.B. im Internet erfolgen, derart, dass die Suchmaschine zur Kommunikationsadresse den Kommunikationsinhaber und/oder Namen ermittelt oder umgekehrt und eine Beziehungsmatrix zum Kunden erstellt wird.

Durch die lange, zeitliche Datenhaltung werden Beziehungen oder Beziehungsschwerpunkte oder Prioritäten ermittelt zur Kommunikationsadresse. So kann man vorangegangene Kommunikationsadressen, bevorzugte erreichbare Zeiten ermitteln oder gar Geräteschwerpunkte. Kommt ein Kunde zur Kommunikationsadresse mit einem unbekannten Kommunikationssystem, kann dies in der Matrix mit berücksichtigt werden für eine weitere spätere Anwendung.

Beispiel: Der Kunde A möchte die Netzkennung 069665311055 anrufen. Das System erkennt, das diese Rufnummer nicht geschaltet ist und/oder immer besetzt ist und/oder geht sofort in das Internet und erkennt aufgrund von alten Daten, hier z.B. einer Vortragsinformation, wo die Netzkennung erwähnt ist, - das diese Netzkennung zum Kunden MT zugeordnet war - jetzt nimmt das System als Suchparameter nicht mehr die Kommunikationsadresse, sondern den Kunden MT und findet zum Kunden die aktuelle Netzkennungen 01606537574, insbesondere mit einer großen Hitrate, Klickrate:

Weiter wird erkannt, das keine weiteren Kommunikationsgeräte, wie z.B. Fax, existieren sondern nur noch in Bezug zur aktuellen Netzkennung ebenso die aktuelle Internetadresse, insbesondere mit ebenso einer hohen Hitrate, Klickrate existiert. Damit wird der Kunde, der die Netzkennung 069665311055 anwählte mit der Netzkennung 01606537574 verbunden.

Gemäß einer weiteren Ausgestaltung des Verfahrens kann es vorgesehen sein, dass eine Konversionsmatrix nach einer Kommunikation um einen Inhalt ergänzt wird, der eine Beziehung zwischen der Netzwerkkennung des anwählenden Kommunikationsgerätes oder der dieses Kommunikationsgerät nutzenden Person und der angewählten Netzwerkkennung oder der diese Netzwerkkennung nutzenden Person ergänzt wird.

Bezogen auf diesen Verfahrensschritt handelt es sich bei der angewählten Netzwerkkennung bevorzugt um diejenige, die tatsächlich verwendet wurde, um den Kommunikationskanal zwischen den beiden nutzenden Personen zu eröffnen, also im Wesentlichen, um eine zweite alternative Netzwerkkennung im Sinne des Verfahrens oder aber um die bestätigte erste Netzwerkkennung.

Ein derartiger Verfahrensschritt ist insbesondere zur Optimierung des erfindungsgemäßen Verfahrens sinnvoll, da beispielsweise im Rahmen des Verfahrens durch mehrfache Aufrufe der Konversionsfunktion bzw. der Konversionsmatrix ein Wahrscheinlichkeits- oder Abbruchkriterium erreicht wurde, nach dem eine Vermittlung zu einer zweiten alternativen Netzwerkkennung durchgeführt wurde. Eine derartige Kommunikation kann sich nach ihrer konkreten Durchführung als richtig und gewünscht erweisen, so dass es sinnvoll ist, hierüber eine Rückmeldung in die Konversionsmatrix einfließen zu lassen, nämlich intern Sinne, dass eine Information über die Beziehung der vorgenannten Art in der Konversionsmatrix gespeichert wird, so dass bei einem zukünftigen nächsten Aufruf derselben ersten Netzwerkkennung bereits unmittelbar oder spätestens nach einem ersten Durchlauf der Konversionsfunktion bzw. nach einer ersten Anwendung der Konversionsmatrix das gewünschte Ergebnis hinsichtlich der zweiten alternativen Netzwerkkennung vorliegt, da das System zwischenzeitlich aus der Erfahrung der vorherigen Vermittlung gelernt hat.

Es ist somit erfindungsgemäß vorgesehen, dass eine Konversionsmatrix im Sinne der Erfindung sich selbst um Einträge ergänzt, insbesondere nach erfolgtem Kommunikationsverbindungsaufbauten zu alternativen zweiten Netzwerkkennungen.

Es kann weiterhin auch vorgesehen sein, dass eine Konversionsmatrix oder die vorgenannte Konversionsfunktion konfigurierbar ist, beispielsweise von außen durch einen Kommunikationsteilnehmer oder aber durch das Telekommunikationsnetzwerk. Letzteres kann beispielsweise im Sinne der erstgenannten Ausführung Anwendung finden, wenn das Telekommunikationsnetzwerk Informationen darüber bereithält, inwieweit ein Telekommunikationsteilnehmer mit einem bestimmten Kommunikationsgerät aktuell technisch erreichbar ist. Dies ist insofern durch das Telekommunikationsnetzwerk alleine möglich, da dieses eine Information beim Ein- oder Ausschalten von Kommunikationsgeräten, wie beispielsweise Mobiltelefonen, automatisch erhält und somit Erreichbarkeitsinformationen vorhalten kann: Eine Konfigurierbarkeit durch Kommunikationsteilnehmer selbst kann z.B. sinnvoll sein, wenn es darum geht, Listen zu konfigurieren, in denen alternative Netzwerkkennungen vorgehalten werden, um das erfindungsgemäße Verfahren im Sinne der ersten Ausführung durchzuführen.

Bezüglich sämtlicher vorgenannter Ausführungen ist festzustellen, dass die in Verbindung mit einer Ausführung genannten technischen Merkmale nicht.nur bei der spezifisch genannten Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

Ein Ausführungsbeispiel der Erfindung ist in der nachfolgenden Figur näher erläutert.

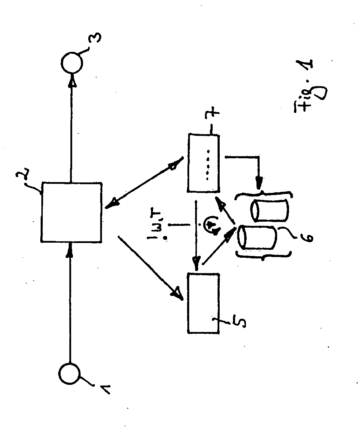

Die Figur 1 zeigt schematisch das Vorgehen des erfindungsgemäßen Verfahrens anhand eines Kommunikationsaufbaus zwischen einem Kommunikationsteilnehmer 1 und einem Kommunikationsteilnehmer 3.
Hierbei kann der Kommunikationsteilnehmer 3 auch ein technisches System sein.

Gemäß der Erfindung kann es hier vorgesehen sein, dass ein Kommunikationsteilnehmer 1 eine erste Netzwerkkennung an seinem Kommunikationsgerät eingibt, um mit einer anderen gewünschten Person 3 durch Telekommunikation in Verbindung zu treten. Die Netzwerkkennung wird in eine Vermittlungsstation 2 im Telekommunikationsnetzwerk übermittelt, über welche sodann das erfindungsgemäße Verfahren aufgerufen werden kann. Hierzu kann es vorgesehen sein, dass die angewählte Netzwerkkennung durch die Vermittlungsstation 2 an eine Einheit 5 übergeben wird. Diese Einheit 5 kann extern oder intern in der Vermittlungseinheit vorgesehen sein.

Die Einheit 5 übernimmt eine Wahrscheinlichkeitsprüfung dahingehend, ob die tatsächlich angewählte Netzwerkkennung mit einer bestimmten Wahrscheinlichkeit wirklich gewählt werden soll oder durch eine andere Netzwerkkennung zu ersetzen ist. Für diese Prüfung wird die Netzwerkkennung als Eingangsgröße in eine Konversionsfunktion oder Konversionsmatrix 6 eingegeben, die in diesem vorliegenden Beispiel zur Verdeutlichung der Matrix in geschweiften Klammern dargestellt ist, wobei die hierin gezeigten Datenbanksymbole verdeutlichen sollen, dass in der Konversionsmatrix bzw. Konversionsfunktion das Wissen aus gegebenenfalls mehreren Datenbanken miteinander verknüpft ist, um sodann anhand der Eingangsgröße der gewählten Netzwerkkennung zu einer Ausgangsgröße zu kommen; die entweder durch die ursprünglich gewählte Netzwerkkennung gebildet wird, insbesondere dann, wenn die intern ermittelte Wahrscheinlichkeit oberhalb einer gewissen Grenzwahrscheinlichkeit oder bei 1 liegt oder aber die als Ausgangsgröße wenigstens eine zweite alternative Netzwerkkenriung 7 bereitstellt insbesondere wenn die intern ermittelte Wahrscheinlichkeit unterhalb einer Grenzwahrscheinlichkeit oder bei 0 liegt.

Es kann sodann vorgesehen sein, dass die ermittelte alternative Netzwerkkennung 7 unmittelbar zurück an die Vermittlungsstelle 2 kommuniziert wird, damit diese die Verbindung zu der gewünschten Person 3 aufbaut. Alternativ kann es auch vorgesehen sein, dass die ermittelte alternative Netzwerkkennung 7 wiederum iterativ als Eingangsgröße in die Einheit 5 übermittelt wird, damit diese eine weitere Prüfung hinsichtlich der Wahrscheinlichkeit vornimmt und hierbei entweder die im vorherigen Iterationsschritt ermittelte zweite Netzwerkkennung beibehält oder erneut zu einer weiteren zweiten alternativen Netzwerkkennung 7 ändert. Diese Iteration, die im Dreieck der Komrhunikationspfeile durch den teilkreisförmigen Pfeil dargestellt ist, kann unterbrochen werden, wenn die jeweils intern ermittelte Wahrscheinlichkeit eine gewissen Grenzgröße W überschreitet oder aber eine Zeit .T überschritten wird.

Nach dem Abbruch der Iteration durch die ein oder andere oder jede mögliche Art von Bedingung wird sodann die ermittelte Netzwerkkennung übermittelt an die Vermittlungsstelle 2, so dass statt an die erste angewählte Netzwerkkennung alternativ die Anwahl der zweiten alternativen Netzwerkkennung erfolgt, um die Person 3 zu erreichen.

Eine konkrete Anwendung kann beispielsweise zur Verdeutlichung des Anwendungsbereichs des Verfahrens so aussehen, dass eine Person 1 seinen Arzt anrufen möchte, hierbei jedoch bei der entsprechenden Telefonnummer in der Zahlenfolge einen Zahlendreher tippt, so dass ohne das erfindungsgemäße Verfahren entweder eine Falschvermittlung oder gar keine Vermittlung stattfinden würde.

In dem erfindungsgemäßen Verfahren wird die eingetippte Telefonnummer an die Einheit 5 übermittelt, die durch Rückfrage in einer Datenbank bzw. durch Anwendung der Konversionsmatrix 6 feststellt, dass zu der gewählten Telefonnummer keine identische Übereinstimmung in der Matrix 6, d.h. keine eindeutige Verknüpfung z.B. zu einer Adressdatenbank vorliegt.

Das erfindungsgemäße Verfahren kann sodann feststellen, dass beispielsweise in einer achtstelligen Telefonnummer zwei Zahlen vertauscht sind, ansonsten aber eine Identität zu einer in der Datenbank bzw. über die Konversionsmatrix verknüpften Rufnummer besteht. So wird bezogen auf das Beispiel von zwei Fehlstellen in einer achtstelligen Rufnummer festgestellt, dass die aufgefundene Telefonnummer zu 75% mit der angewählten Rufnummer übereinstimmt. Das erfindungsgemäße Verfahren kann an dieser Stelle abbrechen und beispielsweise die alternative, als ähnlich empfundene Netzwerkkennung der Vermittlungsstelle 2. zur Verfügung stellen, so dass diese.in korrekter Weise den Arzt 3 anruft.

Das erfindungsgemäße Verfahren kann jedoch auch weitergehen und in einem weiteren Iterationsschritt feststellen durch Rückübermittlung der alternativen zweiten Netzwerkkennung in die Einheit 5, dass bei erneuter Anwendung der Konversionsmatrix 6 festgestellt wird, dass es sich um eine Rufnummer handelt, die gemäß der Konversionsmatrix eine Verknüpfung mit einer Arztpraxis aufweist.

Dieses Ergebnis (die ermittelte Arztpraxis) kann beispielsweise wiederum als Eingangsgröße in einem nächsten Iterationsschritt für die Einheit 5 verwendet werden, wobei festgestellt wird, dass die Arztpraxis eine Verknüpfung durch die Konversionsmatrix mit einer Patientenadressliste aufweist, in welcher die Person 1 aufgelistet ist. Durch diese weitere Feststellung wird somit deutlich, dass mit dem erfindungsgemäßen Verfahren eine Wahrscheinlichkeit von 100% festgestellt wird, dass die Person 1 statt der fehlerhaft eingegebenen Netzwerkkennung tatsächlich die Rufnummer der Arztpraxis wählen wollte, da durch weitere Iterationsschritte festgestellt wurde, dass zu der als ähnlich empfundenen Netzwerkkennung der Arztpraxis die weitere Information vorliegt, nämlich dass die anrufende Person Patient bei dieser Praxis ist.

Das erfindungsgemäße Verfahren bietet somit die Möglichkeit, anhand eines wissensbasierten Systems, bei dem Datenbanken mit unterschiedlichen Informationen, insbesondere Informationen über Beziehungen zwischen Personen und Einrichtungen miteinander verbunden und verknüpft sind, insbesondere durch eine Matrix. Es besteht somit die Möglichkeit, anhand der vorgeschlagenen Konversionsmatrix eingegebene erste Netzwerkkennungen, sofern diese als unwahrscheinlich angesehen werden, zu verwerfen und gegen andere Netzwerkkennungen zu ersetzen, zu denen anhand einer Beziehungsprüfung über die Konversionsmatrix eine höhere Wahrscheinlichkeit ermittelt wird, dass es sich um eine tatsächlich gewünschte Netzwerkkennung handelt.

## Patentansprüche

1. Verfahren zur Durchführung einer Kommunikation in einem Telekommunikationsnetzwerk, bei dem von einem Kommunikationsteilnehmer eine erste Netzwerkkennung durch Anwahl vorgegeben wird, **dadurch gekennzeichnet, dass** die vorgegebene Netzwerkkennung einer Wahrscheinlichkeitsprüfung unterzogen wird, wobei in Abhängigkeit der ermittelten Wahrscheinlichkeit die vorgegebene erste Netzwerkkennung bestätigt oder wenigstens eine zweite alternative Netzwerkkennung vorgeschlagen oder unmittelbar angewählt wird.

2. Verfahren nach Anspruch 1, **dadurch gekennzeichnet, dass** im Fall einer Nicht-Bestätigung der ersten vorgegebenen Netzwerkkennung ein Rückfragedialog durchgeführt wird, insbesondere zur Bestätigung der ersten Netzwerkkennung und/oder zum Vorschlag wenigstens einer alternativen Netzwerkkennung.

3. Verfahren nach einem der vorherigen Ansprüche, **dadurch gekennzeichnet, dass** das eine vorgeschlagene zweite alternative Netzwerkkennung einer, insbesondere derselben Wahrscheinlichkeitsprüfung unterzogen wird, insbesondere solange bis die Wahrscheinlichkeit einen Grenzwert überschreitet oder ein Zeitkriterium erfüllt ist.

4. Verfahren nach einem der vorherigen Ansprüche, **dadurch gekennzeichnet, dass** die Wahrscheinlichkeitsprüfung in Abhängigkeit einer Netzwerkkennung eines anwählenden Kommunikationsgeräts (3) durchgeführt wird.

5. Verfahren nach Anspruch 4, **dadurch gekennzeichnet, dass** einer Netzwerkkennung eines anwählenden Kommunikationsgeräts (3) eine Datenbank (6) und/oder Datenmatrix zugeordnet ist, mit einer Vielzahl von Netzwerkkennungen, wobei die angewählte Netzwerkkennung mit den in der Datenbank (6) / Datenmatrix gespeicherten Netzkennungen verglichen wird.

6. Verfahren nach Anspruch 5, **dadurch gekennzeichnet, dass** nach dem Vergleich entweder:
a) die erste vorgegebene Netzwerkkennung bestätigt wird, wenn diese bereits in der Datenbank / Datenmatrix (6) gespeichert ist, oder
b) die erste vorgegebene Netzwerkkennung bestätigt und in der Datenbank / Datenmatrix (6) gespeichert wird, wenn diese nicht in der Datenbank / Datenmatrix (6) bereits gespeichert ist und auch nicht eine ähnliche Netzwerkkennung gefunden wird, oder
c) die erste vorgegebene Netzwerkkennung verworfen und wenigstens eine zweite alternative Netzwerkkennung vorgeschlagen oder unmittelbar angewählt wird, wenn die erste Netzwerkkennung nicht identisch aber eine ähnliche gefunden wird, oder
d) zu mindestens einer Netzwerkkennung eine Verbindung aufgebaut wird und wenigstes ein weiterer Parameter, insbesondere die Stimme einer unter dieser Netzwerkkennung kontaktierten Person, berücksichtigt wird, um die Wahrscheinlichkeit zu bilden und/oder zu ändern.

7. Verfahren nach einem der vorherigen Ansprüche, **dadurch gekennzeichnet, dass** bei der Wahrscheinlichkeitsprüfung geprüft wird, ob die angewählte erste Netzwerkkennung aktuell technisch erreichbar ist, wobei im Fall der Erreichbarkeit die erste Netzwerkkennung bestätigt wird und im Fall der Nichterreichbarkeit wenigstens eine zweite alternative Netzwerkkennung vorgeschlagen oder unmittelbar angewählt wird, insbesondere wobei der vorgegebenen ersten Netzwerkkennung eine Datenbank und/oder Datenmatrix (6) zugeordnet ist, welche alternative Netzwerkkennungen umfasst.

8. Verfahren nach einem der vorherigen Ansprüche, **dadurch gekennzeichnet, dass** eine erste angewählte Netzwerkkennung und/oder eine Netzwerkkennung des anwählenden Kommunikationsgeräts (1) und/oder die Identität einer das anwählende Kommunikationsgerät (1) benutzenden Person eine Eingangsgröße einer Konversionsfunktion bildet, deren Ausgangsgröße die erste oder wenigstens eine zweite alternative Nerzwerkkennung bildet.

9. Verfahren nach Anspruch 8, **dadurch gekennzeichnet, dass** das die Ausgangsgröße einer Konversionsfunktion die Eingangsgröße einer anderen oder derselben Konversionsfunktion bildet, insbesondere solange, bis die Konversion konvergiert oder ein Zeitkriterium überschritten wird.

10. Verfahren nach Anspruch 8 oder 9, **dadurch gekennzeichnet, dass** eine Konversionsfunktion als eine n-dimensionale Matrix (6) usgebildet ist, in der die Einträge von n Datenbanken miteinander verknüpft sind.

11. Verfahren nach Anspruch 10, **dadurch gekennzeichnet, dass** der Inhalt einer Konversionsmatrix (6) zumindest teilweise sperrbar und/oder zumindest teilweise freischaltbar ist.

12. Verfahren nach einem der vorherigen Ansprüche, **dadurch gekennzeichnet, dass** eine Konversionsmatrix (6) nach einer Kommunikation um einen Inhalt ergänzt wird, der eine Beziehung zwischen der Netzwerkkennung des anwählenden Kommunikationsgeräts (1) oder der dieses Kommunikationsgerät nutzenden Person und der angewählten Netzwerkkennung oder der diese Netzwerkkennung nutzenden Person ergänzt wird.

13. Verfahren nach einem der vorherigen Ansprüche, **dadurch gekennzeichnet, dass** eine Konversionsmatrix (6) konfigurierbar ist, insbesondere durch einen Kommunikationsteilnehmer oder das Telekommunikationsnetzwerk.

14. System zur Durchführung einer Kommunikation in einem Telekommunikationsnetzwerk, bei dem von einem Kommunikationsteilnehmer eine erste Netzwerkkennung durch Anwahl vorgegeben wird, **dadurch gekennzeichnet, dass** das Telekommunikationsnetz eine Einheit (5) umfasst, mit der die vorgegebene Netzwerkkennung einer Wahrscheinlichkeitsprüfung unterzogen wird, wobei in Abhängigkeit der ermittelten Wahrscheinlichkeit die vorgegebene erste Netzwerkkennung bestätigbar oder wenigstens eine zweite alternative Netzwerkkennung vorschlagbar oder unmittelbar anwählbar ist.
